# EUROPEAN PATENT APPLICATION

(11) **EP 2 204 793 A1**
(43) Date of publication of application: **07.07.2010**
(21) Application number: 09172448.4
(22) Date of filing: 07.10.2009
(51) Int. Cl.: G09G 3/34

(54) **Displaying device, terminal of displaying device, and display method**

(30) Priority: 31.12.2008 CN 200810247492
(71) Applicant: Huawei Device Co., Ltd., Longgang District Shenzhen Guangdong 518129 (CN)
(72) Inventor: Liu, Shanping, 518129, Shenzhen Guandong (CN); Ni, Longyu, 518129, Shenzhen Guandong (CN)
(74) Representative: Epping, Wilhelm

(57) **Abstract**

A displaying device, a terminal of the displaying device, and a display method are provided. The displaying device includes: a calculating unit, configured to calculate the active display area that shows the interface content and calculate an image area occupied by a display interface; a creating unit, configured to create image data in the image area and write the image data in the displaying unit; and a displaying unit, configured to display the corresponding information based on the image data. The displaying device may adjust the display area of the screen dynamically according to the display content to reduce the cost of the displaying unit.

## Description

### FIELD OF THE INVENTION

The present invention mainly relates to the display area, especially to the displaying device that may control the power consumption, the terminal of the displaying device, and the display method.

### BACKGROUND

With the increasing development of science and technology, the functions of various hand-held terminal equipment become more and more powerful but the power consumption is rising accordingly. Because the prior art is unable to break through greatly in the battery capacity, various new technologies may not develop well in the terminal equipment by the constraint of the power consumption. The overall power consumption of the equipment is essential to measure the equipment performance. All top manufacturers of the terminal equipment try to reduce the power consumption.

Currently, a liquid crystal display (LCD) is mostly used for the display module in the terminal equipment. The LCD display module consists of an LCD and a light-emitting diode (LED).LCD itself is not luminous and it is provided light source by the LED. Whether the control liquid crystal layer allows lights to transmit through or control the transmittance strength is determined by modulating the bias voltage of LCD liquid crystal layer and changing the arrangement of liquid crystal molecules. As the light source in the display module of the LCD, the LED provides the LCD with backlight of equal brightness through light guide plates. Considering the local brightness in the LCD, the current LCD manufacturers mostly arrange many LEDs equally for backlight. The display module consumes the major power for the terminal equipment. Take the 24-inch Quarter Video Graphics Array (QVGA, with resolution of 240 x 320) screen for example, the power consumption is about 80 mA to 100 mA, about 1/3 to 1/2 the power consumption of Global System for Mobile Communications (GSM) 900 terminals. Therefore, if the power consumption of the LCD display module may be reduced, the whole consumption of the equipment will be greatly reduced accordingly. What consumes the power most in the LCD display module are the LED backlights. The LCD of a common 24-inch QVGA LCD screen consumes about a dozen mA and an LED consumes about 10 mA. As a result, several LEDs as backlights will consume the electricity of dozens or even hundreds of mA.

In the prior art regarding LCD display modules, the backlights are controlled uniformly that is they are switched on/off at the same time. When the display screen is required, the host writes display image data in the LCD, and the control module of backlights switches on all the backlights to display the full screen; when the equipment is in standby mode or turned off, the control module turns off all the backlights, and the host stops writing image data to the LCD.

In implementing the present invention, inventors find that the following disadvantages at least occur in the prior art: The terminal equipment does not require full display in most cases, that is, part of the screen is used to display the whole interface when only a little information is to be displayed. The prior art may not adjust the display area of the screen by the display content. Regardless of the content of the display content, the backlights of the whole display module are turned on to display the full screen. As a result, the display module operates with the most power consumption at any time causing a lot of waste.

### SUMMARY

A displaying device, the terminal of the displaying device, and display method are provided in embodiments of the present invention. The displaying device may adjust the display area of the screen dynamically according to the display content to reduce the cost of displaying unit.

The technical solutions provided in various embodiments of the present invention are implemented as follows.

A displaying device includes:
a calculating unit, configured to calculate the active display area that shows the interface content and calculate the image area occupied by the display interface; a creating unit, configured to create an interface image data in the image area and write the image data in the displaying unit; and a displaying unit, configured to display the corresponding information based on the image data.

A terminal includes a displaying device. The displaying device includes: a calculating unit, configured to calculate the active display area that shows the interface content and calculate the image area occupied by the display interface; a creating unit, configured to create an interface image data in the image area and write the image data in the displaying unit; and a displaying unit, configured to display the corresponding information based on the image data.

A display method includes: calculating the active display area that shows the interface content and the image area occupied by the display interface; creating the interface image data in the image area and writing the interface image data to the displaying unit; and displaying the corresponding information according to the image data.

The technical solution provided in embodiments of the present invention may adjust the display area of the screen dynamically according to the display content. When only a little information is to be displayed, the display area may be reduced so that only part of the screen is used for display. As a result, the power consumption of the displaying unit is lower. Furthermore, the backlights may be turned on/off to light the active display area only. When a little information is to be displayed, only the corresponding backlights are to be turned on. Therefore, the power consumption of the displaying unit may be greatly reduced.

### BRIEF DESCRIPTION OF THE DRAWINGS

To clarify the technical solution in an embodiment of the present invention or the solution using prior art, the drawings used in this embodiment or the prior technical descriptions are described below. Obviously, the following drawings illustrate embodiments of the present invention, based on which other drawings may be obtained by those skilled in the art without innovations.
FIG. 1 shows the structure of the displaying device according to embodiment 1 of the present invention;
FIG. 2 shows the structure of the displaying device according to embodiment 2 of the present invention;
FIG. 3 shows the screen display of the technical solution in FIG. 2;
FIG. 4 shows the structure of the displaying device according to embodiment 3 of the present invention;
FIG. 5 shows the structure of the terminal according to embodiment 1 of the present invention;
FIG. 6 shows the structure of the terminal according to embodiment 2 of the present invention;
FIG. 7 shows the structure of the terminal according to embodiment 3 of the present invention;
FIG. 8 is a flowchart of the display method according to embodiment 1 of the present invention;
FIG. 9 is a flowchart of the display method according to embodiment 2 of the present invention; and
FIG. 10 is a flowchart of the display method according to embodiment 3 of the present invention.

### DETAILED DESCRIPTION

The following section clearly and fully describes the technical solution provided in the embodiments of the present invention. Obviously, only part of the embodiments of the present invention is involved herein. All the other embodiments obtained by those skilled in the art without innovations based on the embodiments of the present invention are covered by the present invention.

The display interface provided in an embodiment of the present invention does not need full display. Both the position and the size of the display area in the screen may be adjusted dynamically according to the display content, that is, using part of the screen to display the interface. If only part of the screen is used for displaying, the area of displaying interface is called the active display area, and the rest of the screen is called the inactive display area.

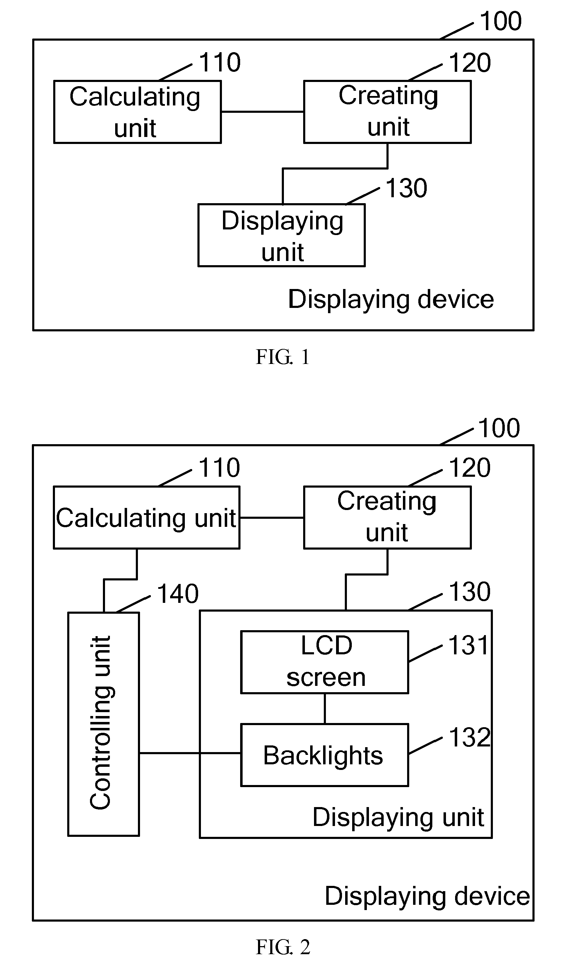

FIG. 1 shows the component structure for embodiment 1 of the displaying device in the present invention. The displaying device 100 includes: the calculating unit 110, the creating unit 120, and the displaying unit 130.
The calculating unit 110 is configured to calculate the active display area, and calculate the image area occupied by the display interface according to the active display area.
The active display area shows the area of the interface content.
The creating unit 120 is configured to create the interface image data in the image area and write the image data in the displaying unit 130.
The displaying unit 130 is configured to display the corresponding information according to the image data. The working process and principle of the displaying device 100 are described in details below.

When the interface program constructs the interface, the calculating unit 100 calculates the position and size of the active display area according to the interface content. In calculating the pixel coordinates values <x,y,x',y'> in the active display area, "x,y" stands for the pixel coordinates values at the upper left corner of the active display and "x',y"' stands for the pixel coordinates values at the lower right corner of the active display. Of course, those skilled in the art also know many other methods. All of the interface content is configured within the area of <x,y,x',y'>. During creating the displayed image, the creating unit 120, according to the active display area of <x,y,x',y'>, calculates the image area of the display interface, creates the interface image data in the image area but creates black or other single color image data outside the active display area, and writes the image data in the displaying unit 130. The displaying unit 130 displays part or full screen according to the image data.

The technical solution provided in the embodiment of the present invention may adjust the display area of the screen dynamically according to the display content. When only a little information is to be displayed, the display area may be reduced so that only part of the screen is used for display. As a result, the power consumption of the displaying unit may be reduced.

FIG. 2 shows the component structure for embodiment 2 of the displaying device in the present invention. The displaying device 100 includes: a calculating unit 110, a creating unit 120, a displaying unit 130, and a controlling unit 140.
The calculating unit 110 is configured to calculate the active display area, and calculate the image area occupied by the display interface according to the active display area.
The creating unit 120 is configured to create the interface image data in the image area and write the image data in the displaying unit 130.
The displaying unit 130 is configured to display the corresponding information according to the image data. The displaying unit 130 includes an LCD screen 131 and backlights 132.
The controlling unit 140 is configured to control the backlights switch 132 of the displaying unit 130 according to the backlights control command that is generated according to the active display area.

The difference between this embodiment and the first embodiment is that in the first embodiment, whether to display part or full screen, all the backlights 132 of the displaying unit 130 are turned on. The backlights 132 provided in the embodiment may be turned on/off according to the size of the display area. When much information is to be displayed on full screen, the controlling unit 140 generates commands according to the active display area to turn on all the backlights 132. When only a little information is to be displayed on part of the screen, the controlling unit 140 generates commands according to the active display area to turn on part of the backlights 132 only. The rest backlights 132 outside the active area are turned off.

Backlights 132 may be controlled individually or by group. Independent control is for the controlling unit 140 to generate a command for each backlight 132. Group control is for the controlling unit 140 to control backlights 132 by group.

Two solutions are provided to control backlights 132: In the first solution, the calculating unit 140 determines the backlights to be turned on/off according to the active display area <x,y,x',y'> and generates commands to control backlights 132 in the displaying unit 130. In the second solution, the controlling unit 140 generates and delivers backlights control commands with the marks of the active display area to the displaying unit 130. The displaying unit 130 determines the backlights 132 to be turned on/off and controls the backlights 132. The first control solution provided in an embodiment of the present invention is preferred.

Control of backlights 132 need to be synchronized with the screen display. When the active display area is changed, the controlling unit 140 needs to generate corresponding commands immediately to turn on/off backlights 132.

The technical solution provided in the embodiment of the present invention may adjust the display area of the screen dynamically according to the display content. When only a little information is to be displayed, the display area may be reduced so that only part of the screen is used for display. As a result, the power consumption of the displaying unit may be reduced. Furthermore, the backlights switches may be controlled according to the active display area. When only a little information is to be displayed, only the corresponding backlights are to be turned on. Therefore, the power consumption of the displaying unit may be greatly reduced.

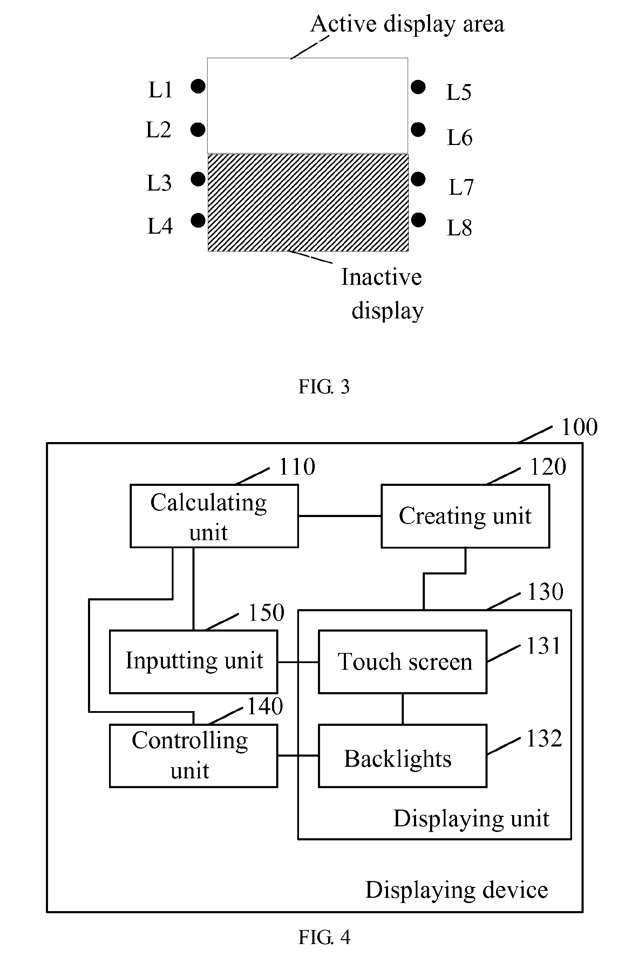

To clarify the technical solution and the beneficial effects in an embodiment of the present invention, a specific instance is taken below. FIG. 3 is the display diagram of the technical solution of embodiment 2 in the present invention.

The active display area shows the interface content. According to the display content in application, the position and size of the active display area may be adjusted dynamically. If the content requires full display, the active display area occupies the whole screen.

The inactive display area does not show the interface content. The whole inactive area displays black or other single color image to differ from the active display area for the user's convenience to look through the content of the active display area.

The backlights L1 to L8 provide the LCD with light source of equal brightness. Most of the backlights of the terminal equipment are uniformly distributed on both sides of the LCD and some others are below the LCD.

The standby interface displays a little information, so full screen display is unnecessary. Therefore, as shown in FIG. 3, the upper half screen is the active display area that displays the whole standby information and the lower half gray screen is the inactive display area. The backlights that provide the light source for the active display area are mainly L1, L2, L5 and L6. Therefore, L1, L2, L5 and L6 are turned on to provide the light source and L3, L4, L7 and L8 are turned off to save the power. The light of L1, L2, L5 and L6 is distributed equally on the active display area by the light guide plates and the standby interface operates normally.

FIG. 4 shows the component structure for embodiment 3 of the displaying device in the present invention. The difference between this embodiment and the first and the second embodiment is that the LCD screen 131 in the displaying unit 130 is an interactive LCD screen, especially an interactive touch screen. The displaying device 100 includes: an inputting unit 150, a calculating unit 110, a creating unit 120, a displaying unit 130 and a controlling unit 140.
The inputting unit 150 is configured to receive user's operation in the interactive LCD screen and deliver the command generated by the operation to the calculating unit 110.
The calculating unit 110 is configured to calculate the active display area according to the command, and calculate the image area occupied by the display interface, according to the active display area.
The creating unit 120 is configured to create the interface image data in the image area and write the image data in the displaying unit 130.
The displaying unit 130 is configured to display the corresponding information according to the image data. The displaying unit 130 includes the touch screen and backlights 132.
The controlling unit 140 is configured to generate backlights control commands according to the active display area and control the switches of backlight 132s in the displaying unit 130.

Users may click on the touch screen and in turn the users operation may change the screen display such as the active display area and the backlights control.

When displaying part of the screen, the user may control the position of the active display area. In some occasions, the user may click on the screen to light it up and the selected active display area includes the best place for the user to click on. The position of the active display area may be changed by the user's dragging on the screen. When the position of the active display area is changed, the corresponding backlights need to be controlled at the same time. The size of the active display area may also be changed. The user may drag or drop the area by one angle or the diagonal of the active display area to zoom in and out. Likewise, when the size of the active display area is changed, the corresponding backlights need to be controlled at the same time. The position and the size of the active display area may be changed according to the user operation, which is called the interactive part screen. The screen is best applied in the touch screen.

The backlights control of the touch screen is the same with the technical solutions in the foregoing embodiments.

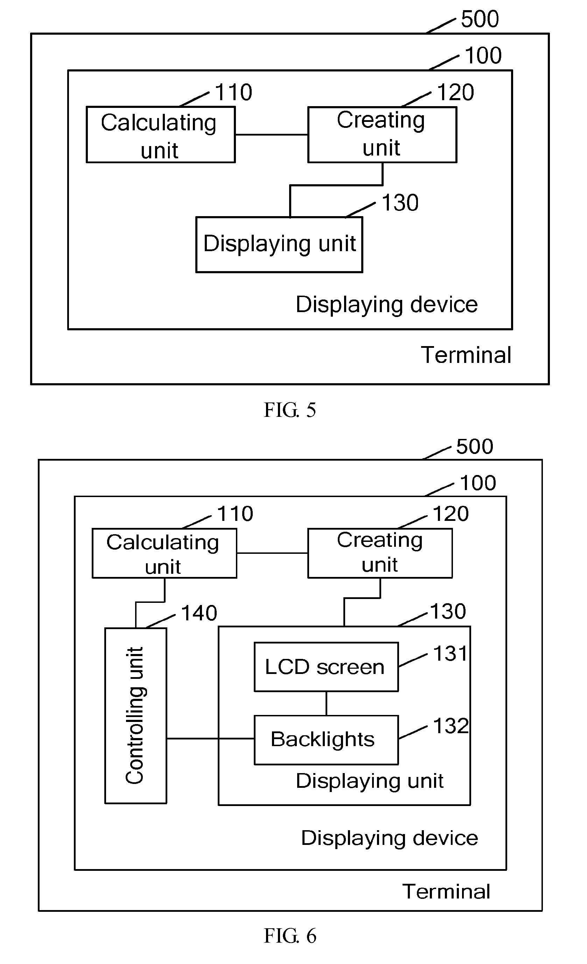

FIG. 5 shows the component structure for embodiment 1 of the terminal in the present invention. The terminal 500 includes the displaying device 100. The displaying device 100 includes: the calculating unit 110, the creating unit 120 and the displaying unit 130. The calculating unit 110 is configured to calculate the active display area, and calculate the image area occupied by the display interface, according to the active display area. The creating unit 120 is configured to create the interface image data in the image area and write the image data in the displaying unit 130. The displaying unit 130 is configured to display the corresponding information according to the image data. The working process and principle of the displaying device 100 have been described in details in the embodiment of FIG. 1.

The technical solution provided in the embodiment of the present invention may adjust the display area of the screen dynamically according to the display content. When only a little information is to be displayed, the display area may be reduced so that only part of the screen is used for display. As a result, the power consumption of the displaying unit may be reduced.

FIG. 6 shows the component structure of a terminal provided in embodiment 2 of the present invention. The terminal 500 includes the displaying device 100. The displaying device 100 includes: the calculating unit 110, the creating unit 120, the displaying unit 130 and the controlling unit 140. The calculating unit 110 is configured to calculate the active display area, and calculate the image area occupied by the display interface, according to the active display area. The creating unit 120 is configured to create the interface image data in the image area and write the image data in the displaying unit 130.The displaying unit 130 is configured to display the corresponding information according to the image data. The displaying unit 130 includes an LCD screen 131 and backlights 132. The controlling unit 140 is configured to generate backlights control commands according to the active display area and control the switches of backlights 132 in the displaying unit 130.

The difference between this embodiment and the first embodiment is that in the first embodiment, whether to display part of or full screen, all the backlights 132 of the displaying unit 130 are turned on. The backlights 132 provided in the embodiment may be turned on/off according to the size of the display area. When much content for full screen display is required, the controlling unit 140 instructs all the backlights 132 to be turned on according to the control generated by the active display area. When only a little information is to be displayed on part of the screen, the controlling unit 140 turns on part of the backlights 132. The rest backlights 132 outside the active area are turned off.

Backlights 132 may be controlled individually or by group. Independent control is for the controlling unit 140 to generate a command for each backlight 132. Group control is for the controlling unit to control backlights 132 by group.

Two solutions are provided to control backlights 132.In the first solution, the calculating unit 140 determines the backlights to be turned on/off according to the active display area <x,y,x',y'> and generates commands to control backlights 132 in the displaying unit 130. In the second solution, the controlling unit 140 generates and delivers backlights control commands with the marks of the active display area to the displaying unit 130. The displaying unit 130 determines the backlights 132 to be turned on/off and controls the backlights 132. The first control solution provided in an embodiment of the present invention is preferred.

Control of backlights 132 need to be synchronized with the screen display. When the active display area is changed, the controlling unit 140 needs to generate commands immediately to turn on/off backlights 132.

The technical solution provided in the embodiment of the present invention may adjust the display area of the screen dynamically according to the display content. When only a little information is to be displayed, the display area may be reduced so that only of the screen is used for display. As a result, the power consumption of the displaying unit may be reduced. Furthermore, the backlights switches may be controlled according to the active display area. When only a little information is to be displayed, only the corresponding backlights are to be turned on. Therefore, the power consumption of the displaying unit may be greatly reduced.

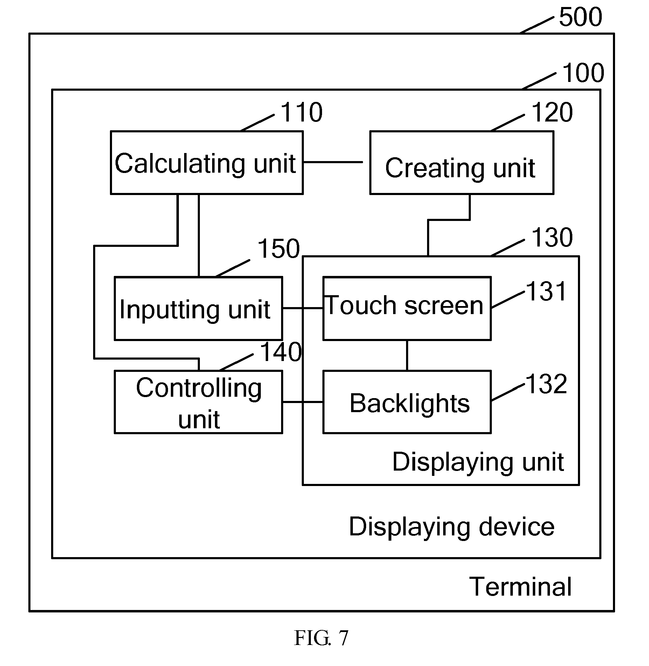

FIG. 7 shows the component structure for embodiment 3 of the terminal in the present invention. The terminal 500 includes the displaying device 100. The displaying device 100 includes: the inputting unit 150, the calculating unit 110, the creating unit 120, the displaying unit 130 and the controlling unit 140. The difference between this embodiment and the first and the second embodiment is that the LCD screen 131 in the displaying unit 130 is an interactive LCD screen, especially an interactive touch screen.
The inputting unit 150 is configured to receive user's operation in the interactive LCD screen and deliver the command generated by the operation to the calculating unit 110.
The calculating unit 110 is configured to calculate the active display area according to the command, and calculate the image area occupied by the display interface, according to the active display area.
The creating unit 120 is configured to create the interface image data in the image area and write the image data in the displaying unit 130.
The displaying unit 130 is configured to display the corresponding information according to the image data. The displaying unit 130 includes the touch screen and backlights 132.
The controlling unit 140 is configured to generate backlights control commands according to the active display area to turn on/off the backlights 132 in the displaying unit 130.

Users may click on the touch screen and in turn the users operation may change the screen display such as the active display area and the backlights controls.

When displaying part of the screen, the user may control the position of the active display area. In some occasions, the user may click on the screen to light up the screen and the selected active display area includes the best place for the user to click on. The position of the active display area may also be changed by the user dragging on the screen. When the position of the active display area is changed, the corresponding backlights need to be controlled at the same time. The size of the active display area may also be changed. The user may drag or drop the area by one angle or the diagonal of the active display area to zoom in and out. Likewise, when the size of the active display area changes, the corresponding backlights need to be turned on/off at the same time. The position and the size of the active display area may be changed according to the user operation, which is called the interactive part screen. The screen is best applied in the touch screen.

The backlights control of the touch screen is the same with the technical solutions in the foregoing embodiments.

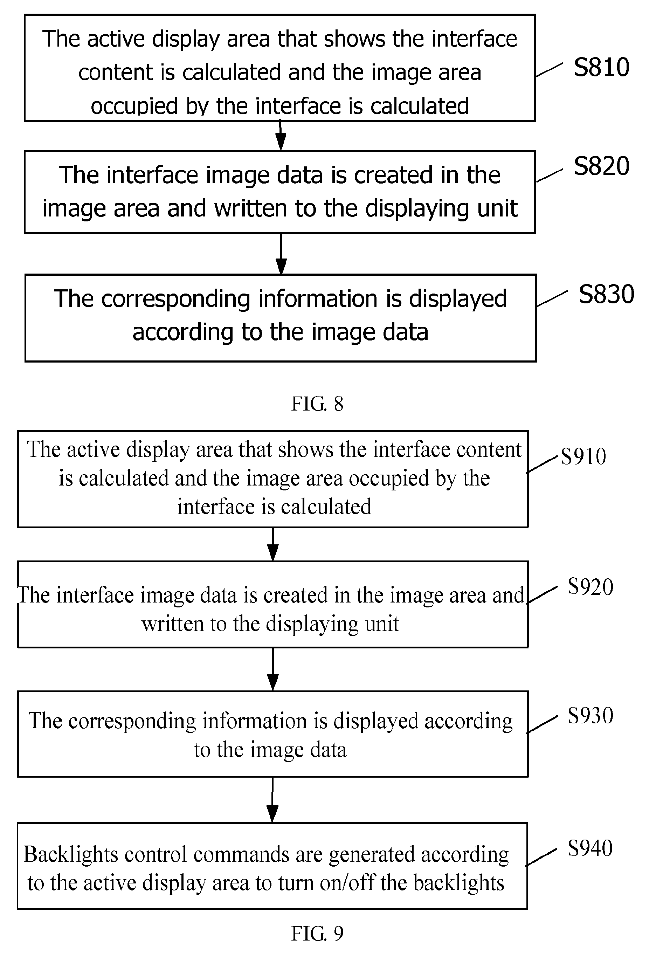

FIG. 8 shows a flowchart for embodiment 1 of the display method in the present invention, including the following blocks:
S810: The active display area is calculated and the image area occupied by the display interface is calculated according to the active display area. The active display area is the area for displaying the interface content.
S820: Interface image data is created in the image area and written to the displaying unit.
S830: The image is displayed according to the data.

When the interface program constructs the interface, the position and the size of the active display area are calculated based on the interface content. In calculating the pixel coordinates values <x,y,x',y'> in the active display area, "x,y" stands for the pixel coordinates values at the upper left corner of the active display and "x',y"' stands for the pixel coordinates values at the lower right corner of the active display. Of course, those skilled in the art also know many other methods. All of the interface content is configured within the area of <x,y,x',y'>. During creating the displayed image, the active display area of <x,y,x' ,y'> calculates the image area of the display interface, creates the interface image data in the image area but creates black or other single color image data outside the active display area, and writes the image data in the displaying unit. Part or full screen is displayed according to the image data.

The technical solution provided in the embodiment of the present invention may adjust the display area of the screen dynamically according to the display content. When only a little information is to be displayed, the display area may be reduced so that only part of the screen is used for display. As a result, the power consumption of the displaying unit may be reduced.

FIG. 9 shows a flowchart for embodiment 2 of the display method in the present invention, including as follows:
S910: The active display area is calculated and the image area occupied by the display interface is calculated according to the active display area. The active display area is the area for displaying the interface content.
S920: Interface image data is created in the image area and written to the displaying unit.
S930: The image is displayed according to the data.
S940: Backlights control commands are generated according to the active display area to turn on/off the backlights in the displaying unit.
S940 is performed after the active display area is calculated in S910.

The difference between this embodiment and the firs embodiment is that in the first embodiment, whether to display part or full screen, all the backlights are turned on. The backlights in this embodiment, however, may be turned on/off according to the size of the display area.

The backlights may control independently or by zones. The independent control is to control the command generated by every single backlight. The zone control is to group the backlights and control the backlights by groups. Backlights may be controlled individually or by group. Independent control is to generate a command for each backlight. Group control is to control backlights by group.

Control of the backlights need to be synchronized with the screen display. When the active display area is changed, corresponding control commands need to be generated immediately to control the switches of the backlights.

The technical solution provided in the embodiment of the present invention may adjust the display area of the screen dynamically according to the display content. When only a little information is to be displayed, the display area may be reduced so that only part of the screen is used for display. As a result, the power consumption of the displaying unit may be reduced. Furthermore, the backlights may be turned on/off according to the active display area. When only a little information is to be displayed, only the corresponding backlights are to be turned on. Therefore, the power consumption of the displaying unit may be greatly reduced.

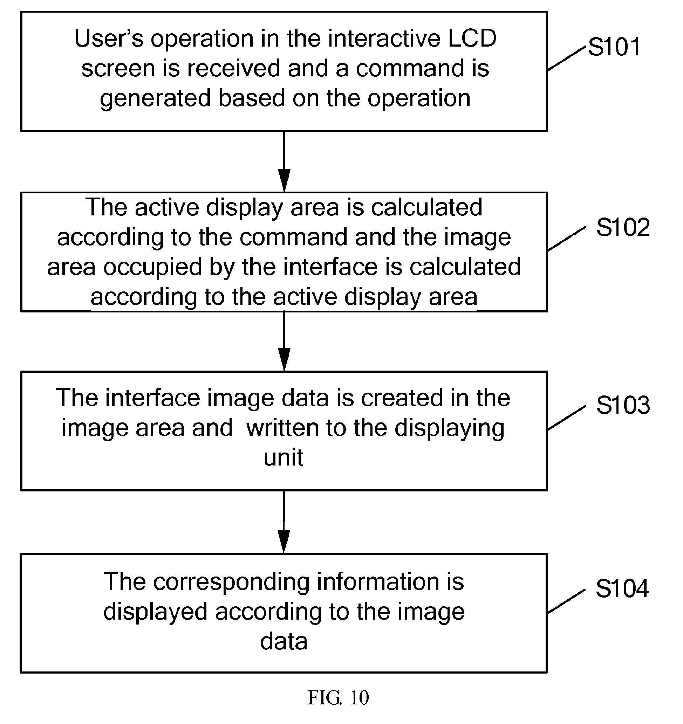

FIG. 10 shows a flowchart for embodiment 3 of the display method in the present invention, including as follows:
S101: User's operation in the interactive LCD screen is received and the corresponding commands are generated.
S102: The active display area is calculated on basis of the commands and the image area occupied by the display interface is calculated according to the active display area.
S103: Interface image data is created in the image area and written to the displaying unit.
S104: The Image is displayed according to the data.

This embodiment may also include S105, which generates backlights control command according to the active display area and controls the switches of the backlights in the displaying unit.

Users may click on the touch screen and in turn the users operation may change the screen display such as the active display area and the backlights controls.

When displaying part of the screen, the user may control the position of the active display area. In some occasions, the user may click on the screen to light up the screen and the selected active display area includes the best place for the user to click on. The position of the active display area may also be changed by the user dragging on the screen. When the position of the active display area changes, the corresponding backlights need to be turned on/off at the same time. The size of the active display area may also be changed. The user may drag or drop the area by one angle or the diagonal of the active display area to zoom in and out. Likewise, when the size of the active display area changes, the corresponding backlights need to be turned on/off at the same time. The position and the size of the active display area may be changed according to the user operation, which is called the interactive part screen. The screen is best applied in the touch screen.

The difference between this embodiment and the first and the second embodiment is that the LCD screen in this displaying unit is an interactive LCD screen, especially an interactive touch screen.

The embodiments of methods correspond to the embodiments of device. Those not described in the embodiments of methods may refer to the description of the corresponding embodiments of device.

Only as some good examples of the present invention, the foregoing embodiments shall in no event be construed to limit the scope of the present invention. Any modification, equal substitution and improvement that are within the spirit and the principle are in the scope of protection of the present invention.

## Claims

1. A displaying device, comprising:
a calculating unit, configured to calculate an active display area and calculate an image area occupied by a display interface according to the active display area, wherein the active display area is an area that displays an interface content;
a creating unit, configured to create image data in the image area and write the image data in a displaying unit; and
the displaying unit, configured to display corresponding information based on the image data.

2. The displaying device according to claim 1, wherein the displaying unit comprises a liquid crystal display, LCD, screen and backlights, and the displaying device further comprises:
a controlling unit, configured to control backlight switches of the displaying unit according to a backlight control command generated by the active display area.

3. The displaying device according to claim 2, wherein the calculating unit is configured to calculate the active display area based on the interface content.

4. The displaying device according to claim 3, wherein the LCD screen is an interactive LCD screen.

5. The displaying device in claim 4, further comprising an inputting unit, configured to receive user's operation in the interactive LCD screen and deliver a command generated by the use's operation to the calculating unit; wherein
the calculating unit calculates the active display area according to the command, and calculates the image area occupied by the display interface according to the active display area.

6. The displaying device according to claim 5, wherein the interactive LCD screen is a touch screen.

7. A terminal, comprising a displaying device in any one of claims 1-6.

8. A display method, comprising:
calculating an active display area, and calculating an image area occupied by a display interface according to the active display area, wherein the active display area is an area that displays an interface content;
creating interface image data in the image area, and writing the created image data into a displaying unit; and
performing a display according to the image data.

9. The display method according to claim 8, after calculating the active display area, further comprising:
generating corresponding backlight control commands according to the active display area, and controlling corresponding backlight switches of the displaying unit.

10. The display method according to claim 8 or claim 9, wherein the calculating of the active display area comprises:
calculating the active display area according to the interface content.

11. The display method according to claim 10, before calculating the active display area, further comprising: receiving user's operation in an interactive liquid crystal display, LCD, screen, and generating a command according to the operation;
wherein the calculating of the active display area and the calculating of the image area occupied by the display interface according to the active display area comprises:
calculating the active display area according to the command, and calculating the image area occupied by the display interface according to the active display area.

## Amended claims

### Amended claims in accordance with Rule 137(2) EPC.

**1.** A displaying device, comprising:
a calculating unit, configured to calculate an active display area based on the interface content and calculate an image area occupied by a display interface according to the active display area, wherein the active display area is an area that displays an interface content;
a creating unit, configured to create image data in the image area and write the image data in a displaying unit;
the displaying unit, comprising a liquid crystal display, LCD, screen and backlights, configured to display corresponding information based on the image data; and
a controlling unit, configured to control backlight switches of the displaying unit according to a backlight control command generated by the active display area.

**2.** The displaying device according to claim 1, wherein the LCD screen is an interactive LCD screen.

**3.** The displaying device in claim 2, further comprising an inputting unit, configured to receive user's operation in the interactive LCD screen and deliver a command generated by the use's operation to the calculating unit; wherein the calculating unit calculates the active display area according to the command, and calculates the image area occupied by the display interface according to the active display area.

**4.** The displaying device according to claim 3, wherein the interactive LCD screen is a touch screen.

**5.** A terminal, comprising a displaying device in any one of claims 1-4.

**6.** A display method, comprising:
calculating an active display area according to an interface content, and calculating an image area occupied by a display interface according to the active display area,
wherein the active display area is an area that displays the interface content;
creating interface image data in the image area, and writing the created image data into a displaying unit; and
performing a display according to the image data; and
after calculating the active display area, generating corresponding backlight control commands according to the active display area, and controlling corresponding backlight switches of the displaying unit.

**7.** The display method according to claim 6, before calculating the active display area, further comprising: receiving user's operation in an interactive liquid crystal display, LCD, screen, and generating a command according to the operation;
wherein the calculating of the active display area and the calculating of the image area occupied by the display interface according to the active display area comprises:
calculating the active display area according to the command, and calculating the image area occupied by the display interface according to the active display area.
